# EUROPÄISCHE PATENTSCHRIFT

(11) **EP 0 636 157 B1**
(45) Veröffentlichungstag und Bekanntmachung des Hinweises auf die Patenterteilung: **23.04.1997**
(21) Anmeldenummer: 94906908.2
(22) Anmeldetag: 07.02.1994
(51) Int. Cl.: C08J 3/24, C04B 26/02, C08F 299/04

(54) **REAKTIONSHARZMÖRTEL FÜR ZWEIKOMPONENTENSYSTEME**
REACTION-RESIN MATERIAL FOR TWO-COMPONENT SYSTEMS
MORTIER DE RESINE COMPOSITE POUR SYSTEMES A DEUX COMPOSANTS

(30) Priorität: 17.02.1993 DE 4304824
(43) Veröffentlichungstag der Anmeldung: 01.02.1995
(73) Patentinhaber: UPAT GMBH & CO, D-79312 Emmendingen (DE)
(72) Erfinder: WEBER, Christian, D-79312 Emmendingen (DE); GRÜN, Jürgen, D-79268 Bötzingen (DE); KOLESKO, Regina, D-79312 Emmendingen (DE); KIMMINICH, Peter, D-79312 Emmendingen (DE)
(86) Internationale Anmeldenummer: EP9400334
(87) Internationale Veröffentlichungsnummer: WO9419397

(56) Entgegenhaltungen:
- DE-A- 2 757 442
- DE-B- 1 205 038
- DATABASE WPI Week 9321, Derwent Publications Ltd., London, GB; AN 93-172766 & JP,A,5 105 862 (TOKYO THREE BOND CO LTD) 27. April 1993
- DATABASE WPI Week 8028, Derwent Publications Ltd., London, GB; AN 80-49184C & SU,A,429 658 (MECH ENG DES TECHN) 25. Februar 1980
- DATABASE WPI Week 9321, Derwent Publications Ltd., London, GB; AN 93-172766 & JP,A,5 105 862
- DATABASE WPI Week 8028, Derwent Publications Ltd., London, GB; AN 80-49184C & SU,A,429 658

## Beschreibung

Die Erfindung betrifft einen Reaktionsharzmörtel für Zweikomponentensysteme zur Herstellung eines Kunstharzkörpers, insbesondere für die Verankerung von Befestigungselementen im Befestigungsgrund

Derartige Reaktionsharzmörtel sind in verschiedenen Ausführungen seit langem bekannt (DE-PS 1 205 038). Regelmäßig handelt es sich um Zweikomponentensysteme, wobei eine Komponente das Reaktionsharz und die andere Komponente den Härter enthält. Andere übliche Bestandteile wie Füllstoffe, Beschleuniger, Stabilisatoren, Thixotropiermittel, reaktive Verdünner, Inhibitoren können in der einen und/oder der anderen Komponente enthalten sein.

In der DE-PS 1 205 038 ist eine mit Harz- und Härterkomponente gefüllte Glaspatrone dargestellt. Die Glaspatrone wird im Bohrloch durch Eintreiben einer Ankerstange zerstört, die getrennten Komponenten miteinander vermischt und der Aushärtevorgang ausgelöst. Derartige Patronen weisen den Nachteil auf, daß sie zum Entmischen der Bestandteile neigen.

Im Falle, daß das Dibenzoylperoxid mit Quarzsand vermischt wird, erfolgt beim Transport derartiger Patronen durch Rütteln und Schütteln eine Entmischung des Dibenzoylperoxids vom Quarzsand und in einer ungünstigen Situation sogar eine totale Separierung der Bestandteile, so daß im oberen Bereich der Glaspatrone sich Dibenzoylperoxid und im unteren Bereich der Quarzsand ansammelt.

In Folge der Entmischung der Bestandteile entsteht eine ungleichmäßige Verteilung des Dibenzoylperoxids in der Härterkomponente, was einen negativen Einfluß auf das Langzeitverhalten des entstehenden Kunstharzkörpers hat.

Die Zusammensetzung des Härters mit einem festen Füllstoff nach PS 1 205 038 wie Quarzsand, Glasfasern, NH₄CO₃, NaHCO₃ ist unhomogen, weist kein Fließverhalten auf und ist aus diesem Grund für die Anwendung in einer Zweikammerkartusche mit einem Statikmischer ungeeignet.

In der DE-OS 35 14 031 und DE-OS 36 17 702 ist ein Reaktonsharzmörtel beschrieben, in dem die Härterkomponente in reiner Form oder phlegmatisiert, z. B. mit Phthalat, Chloroparaffin, die gleichzeitig Weichmacherfunktion haben, beschrieben.

Derartige Phlegmatisierungsmittel in der Härterkomponente weisen den Nachteil auf, daß sie sich trotz Zugabe von Thixotropiermitteln nach einer gewissen Zeit von dem Härter trennen. Dadurch wird eine uneinheitliche Verteilung des Benzoilperoxides in der Härterkomponente verursacht. Dies ist besonders nachteilig im Falle einer Anwendung des Reaktionsmörtels in Zweikammerkartuschen, wo keine Möglichkeit besteht, vor dem Vermischen der Komponente die Härterkomponente nochmals zu homogenisieren. Die Homogenität der Härterkomponente ist besonders wichtig, bei Zweikammerkartuschen mit einem Statikmischer, bei denen die Komponenten in einem vorgegebenen Verhältnis in den Statikmischer eintreten. Dies hat einen entscheidenden Einfluß auf die Eigenschaften des ausgehärteten Körpers.

Weiterhin ist es nachteilig, daß die vorhandenen Weichmacher in ungeänderter chemischer Form im ausgehärteten Kunststoffkörper bleiben, die Zwischenräume im Duromergerüst füllen und dadurch die mechanischen Eigenschaften des Körpers verschlechtern. Einige Phthalate, z. B. Dibutylphthalat, tendieren zum Ausschwitzen aus dem ausgehärteten Körper, und den Verbund zu der Bohrlochwandung nach einer längeren Zeit schwächen.

Die Aufgabe der vorliegenden Erfindung ist es, einen Reaktionsharzmörtel, insbesondere zum Einsatz in Zweikammerkartuschen mit einem Statikmischer, zu erreichen, der die Festigkeit des Kunstharzkörpers und den Verbund zu der Bohrlochwandung verbessert sowie Verankerung mit hoher und dauerhafter Verbundfestigkeit ermöglicht.

Erfindungsgemäß wird diese Aufgabe durch die kennzeichnenden Merkmale des Anspruchs 1 gelöst.

Es hat sich unerwartet erwiesen, daß durch die Zugabe von mindestens 30 Gew.% einer organischen Verbindung die Epoxid- und/oder Isocyanatgruppen enthält, zum Phlegmatisierungsmittel des Benzoylperoxids in der Härterkomponente das Erreichen einer homogenen und physikalisch stabilen Paste ermöglicht. Dadurch wird gesichert, daß die abgefüllten Kartuschen auch nach einer längeren Zeit beim Auspressen der Komponenten ein vorgegebenes Verhältnis der beiden Komponenten im Statikmischer erreichen.

Die weichmachende Wirkung des Phlegmatisierungsmittels wird durch das Einbauen der organischen Verbindungen in das Gerüst des Kunststoffkörpers bedeutend gemindert.

Die folgenden Beispiele in Tabelle 1 - 3 zeigen die Ausführung der vorliegenden Erfindung und beschreiben Eigenschaften des erreichten Kunstharzkörpers.

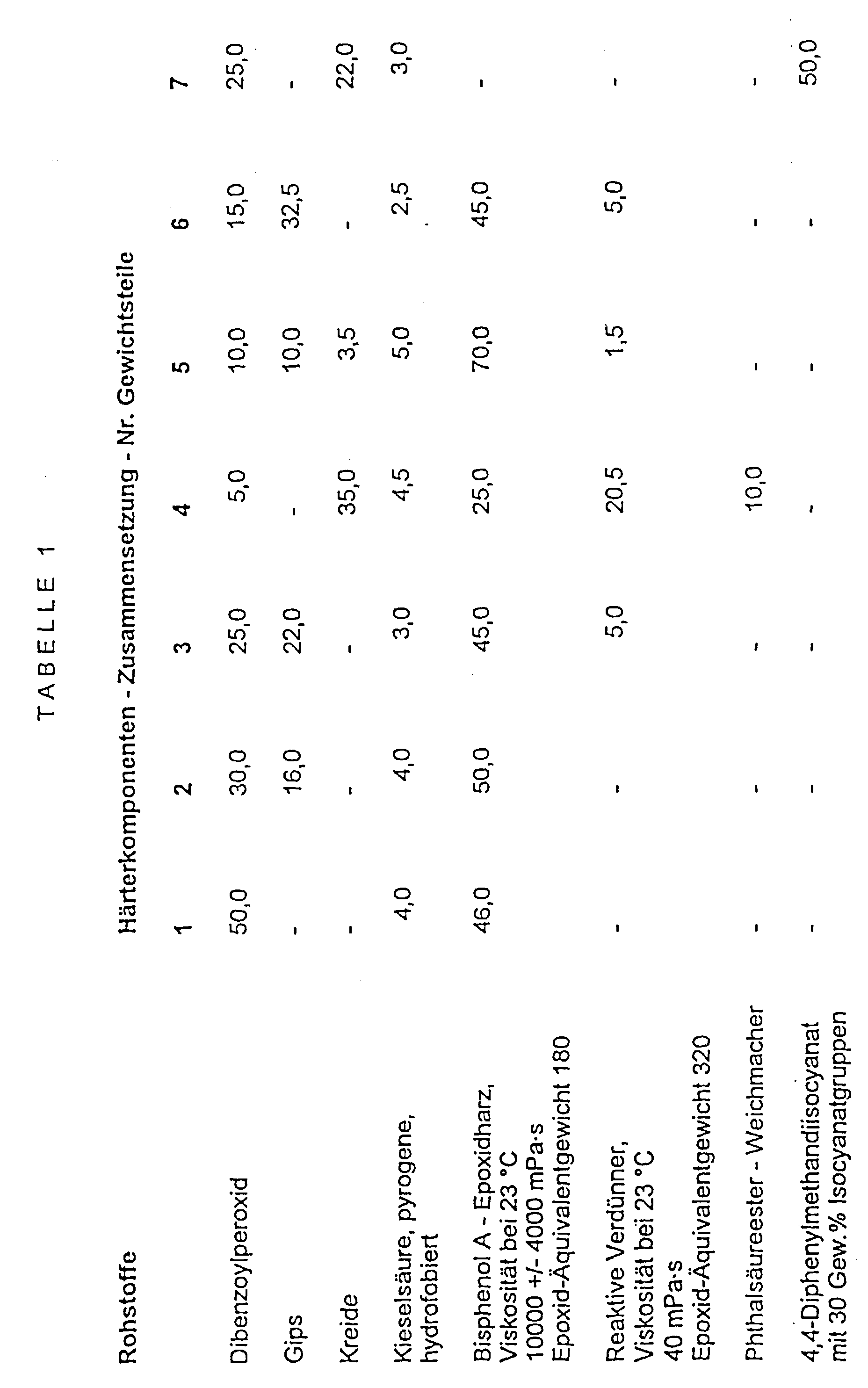

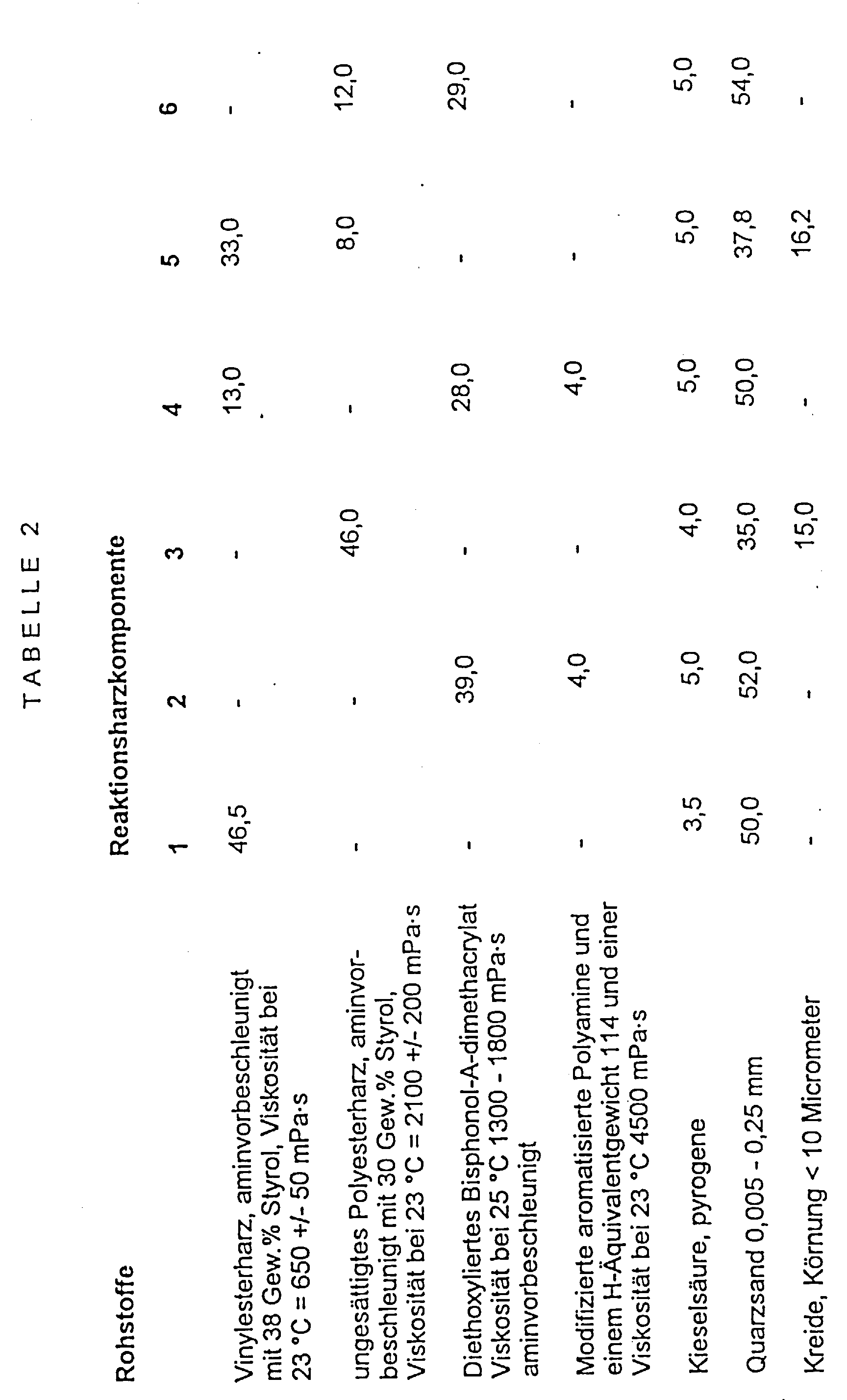

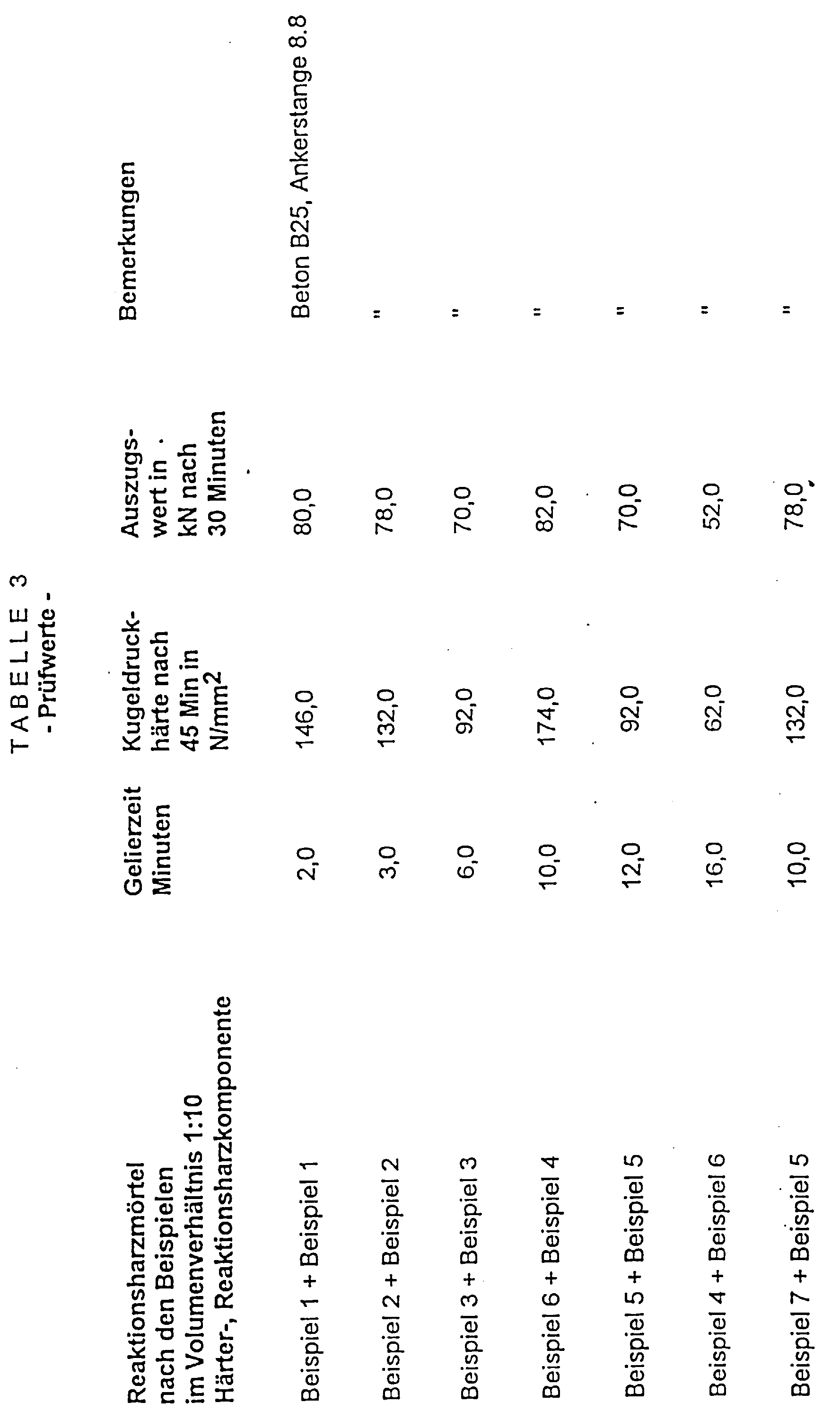

## Patentansprüche

1. Reaktionsharzmörtel zur Erzeugung von Kunstharzkörpern zum Einsatz in Zweikammerkartuschen mit einem Statikmischer, wobei der Reaktionsharzmörtel eine vorbeschleunigte Harzkomponente in einer Kammer und die Härterkomponente in der anderen Kammer enthält, **dadurch gekennzeichnet**, daß die Härterkomponente aus einem organischen Peroxid und einem reaktiven Phlegmatisierungsmittel, das mindestens 30 Gew.% von einer organischen Verbindung, die Epoxid und/oder Isocyanatgruppen enthält, besteht.

2. Reaktionsharzmörtel nach Anspruch 1, **dadurch gekennzeichnet**, daß die Härterkomponente ein organisches Peroxid von 5 - 50 Gew.% enthält.

3. Reaktionsharzmörtel nach Anspruch 1, **dadurch gekennzeichnet**, daß als die vorbeschleunigte Harzkomponente ein Harz, das eine OH-, NH-, NH₂, COOH-Gruppe enthält, verwendet wird.

4. Reaktionsharzmörtel nach Anspruch 1, **dadurch gekennzeichnet**, daß als Harz ein ungesättigtes Polyesterharz und/oder Vinylesterharz und/oder Acrylharz und eventuell Polyamine verwendet wird.

## Claims

1. Reaction resin mortar for producing synthetic resin bodies for use in two-chamber cartridges having a static mixer, the reaction resin mortar containing a preaccelerated resin component in one chamber and the hardener component in the other chamber, characterised in that the hardener component consists of an organic peroxide and a reactive stabilising agent that contains at least 30% by weight of an organic compound containing epoxy and/or isocyanate groups.

2. Reaction resin mortar according to claim 1, characterised in that the hardener component contains an organic peroxide in an amount of from 5 to 50% by weight.

3. Reaction resin mortar according to claim 1, characterised in that there is used as the preaccelerated resin component a resin containing an OH, NH, NH₂ or COOH group.

4. Reaction resin mortar according to claim 1, characterised in that there is used as the resin an unsaturated polyester resin and/or vinyl ester resin and/or acrylic resin and, optionally, polyamines.

## Revendications

1. Mortier de résine composite pour la production de corps en matière synthétique ou plastique à placer dans des cartouches à deux compartiments comportant un mélangeur statique, le mortier de résine composite contenant un composant résine pré-accélérée dans un compartiment et le composant durcisseur dans l'autre compartiment, mortier caractérisé en ce que le composant durcisseur consiste en un peroxyde organique et en un agent réactif de flegmatisation, qui contient au moins 30% en poids d'un composé organique contenant des groupes époxyde et/ou isocyanate.

2. Mortier de résine composite selon la revendication 1, caractérisé en ce que le composant durcisseur contient de 5 à 50% en poids d'un peroxyde organique.

3. Mortier de résine composite selon la revendication 1, caractérisé en ce que le composant résine pré-accélérée utilise une résine contenant des groupes OH , NH , NH₂, COOH .

4. Mortier de résine composite selon la revendication 1, caractérisé en ce que l'on utilise comme résine une résine de polyester insaturée et/ou une résine d'ester vinylique et/ou une résine acrylique et éventuellement des polyamines.
